# EUROPEAN PATENT APPLICATION

(11) **EP 4 119 437 A1**
(43) Date of publication of application: **18.01.2023**
(21) Application number: 21767682.4
(22) Date of filing: 05.03.2021
(51) Int. Cl.: B63B 27/24, B63B 77/10, B63B 35/00, B63B 35/44

(54) **FLOATING STRUCTURE AND OFFSHORE FACILITY**

(30) Priority: 11.03.2020 JP 2020042477
(71) Applicant: Japan Marine United Corporation, Yokohama-City, Kanagawa 220-0012 (JP)
(72) Inventor: YOSHIMOTO, Haruki, Yokohama-City Kanagawa 220-0012 (JP); KAMIZAWA, Ken, Yokohama-City Kanagawa 220-0012 (JP)
(74) Representative: Banzer, Hans-Jörg
(86) International application number: PCT/JP2021/008811
(87) International publication number: WO 2021/182355

(57) **Abstract**

A floating structure and an offshore facility capable of reducing a load applied to a cable to be thrown into the sea are provided.

A floating structure 11 includes a lower hull 2 that constitutes a floating body in a state of being submerged in water, four columns 3 erected on the lower hull 2, an upper hull 4 arranged on the four columns 3, and protection pipe 5 supported at both ends by the lower hull 2 and the upper hull 4. The lower hull 2 includes a central part 21 and four columnar bodies 22 radially extending from the central part 21. The protection pipe 5 is supported at both ends by the central parts 21 of the upper hull 4 and the lower hull 2.

## Description

### Technical Field

The present invention relates to a floating structure and an offshore facility, and more particularly to a semi-submersible type floating structure and an offshore facility.

### Background Art

In Japan at present, the spread of renewable energy power generation facilities offshore is expected, such as implementation of "Act on Promoting the Utilization of Sea Areas for the Development of Marine Renewable Energy Power Generation Facilities". Floating structures are required to install power generation facilities offshore. For example, floating structures used in offshore wind power generation facilities are roughly classified into the semi-submersible type, a spar type, and a tension leg platform (TLP) type in general.

Each of these floating structures is in a semi-submersible form in a broad sense, but is distinguished in terms of having the following characteristics. The semi-submersible type floating structure is a catenary-moored floating body having a water surface penetration part configured in a multi-column structure. The spar type floating structure is a catenary-moored floating body having a water surface penetration part configured with one pillar body. The TLP type floating structure is a taut-moored box type floating body on the sea floor.

Not only wind power generation but also offshore power generation facilities require a power transmission cable for collecting obtained electric power or transmitting the power to the ground. For example, the floating structure described in Patent Literature 1 includes a mooring mechanism such as a turret mooring apparatus arranged on a side surface part of the floating body, and a submarine cable is connected to the floating body via a turret.

### Citation List

### Patent Literature

Patent Literature 1: JP 2005-504205 A

### Summary of Invention

### Technical Problem

As in the invention described in Patent Literature 1, when the power transmission cable is thrown into the sea from an outer edge of the floating body, the outer edge of the floating body is a part where up-down motion due to pitching is severe, and there is a problem that a load applied to the power transmission cable is great and the power transmission cable is easily damaged. Therefore, the life of the power transmission cable is shortened and the cost is increased. This also goes against the need for continuous use of the floating structure for a long period of time. Note that the same problem applies to a linear structure (for example, a communication cable, a fluid riser hose, and the like) to be thrown into the sea other than the power transmission cable.

The present invention has been made in view of such problems, and an object is to provide a floating structure and an offshore facility capable of reducing a load applied to a cable to be thrown into the sea.

### Solution to Problem

According to the present invention, there is provided a floating structure including: a lower hull that constitutes a floating body in a state of being submerged in water; a plurality of columns erected on the lower hull; an upper hull arranged on the plurality of columns; and a protection pipe that is supported at both ends by the lower hull and the upper hull and into which a linear structure can be inserted, in which the lower hull has a configuration including a central part and a plurality of columnar bodies radially extending from the central part, and the protection pipe is arranged on the central part or a side surface of the columnar body close to the central part.

The lower hull may have a support surface on which the protection pipe is arranged on a side surface of the central part.

The linear structure may be a power transmission cable, may be a communication cable, or may be a fluid conveyance hose.

The column may have a broad part in the water surface penetration part.

The column may have an inclined part whose upper part is inclined toward the center.

According to the present invention, there is provided an offshore facility including a floating structure having any of the above-mentioned configurations, in which an upper structure arranged in the upper hull is any of a power generation facility, a substation facility, a power storage facility, an oil/gas production facility, a carbon dioxide capture and storage facility, and an observation facility.

### Advantageous Effects of Invention

According to the floating structure and the offshore facility according to the above-mentioned present invention, since the protection pipe for the linear structure is arranged in a part close to the center of the floating structure, the linear structure such as a cable can be arranged in a place where up-down motion due to pitching is small, and a load applied to the linear structure to be thrown into the sea can be reduced. Since the both ends of the protection pipe are supported by the lower hull and the upper hull, the strength of the protection pipe can be improved.

### Brief Description of Drawings

Fig. 1 is a side view that illustrates an offshore facility that includes a floating structure according to an embodiment of the present invention.
Fig. 2 is a plan view of the offshore facility illustrated in Fig. 1.
Fig. 3 is a cross-sectional view that is taken along line A-A of the floating structure illustrated in Fig. 1.
Fig. 4 is a view that illustrates a first modification of the floating structure illustrated in Fig. 1.
Fig. 5 is views that illustrate another modification of the floating structure illustrated in Fig. 1, where Fig. 5(A) illustrates a second modification, Fig. 5(B) illustrates a third modification, Fig. 5(C) illustrates a fourth modification, and Fig. 5(D) illustrates a fifth modification.

### Description of Embodiments

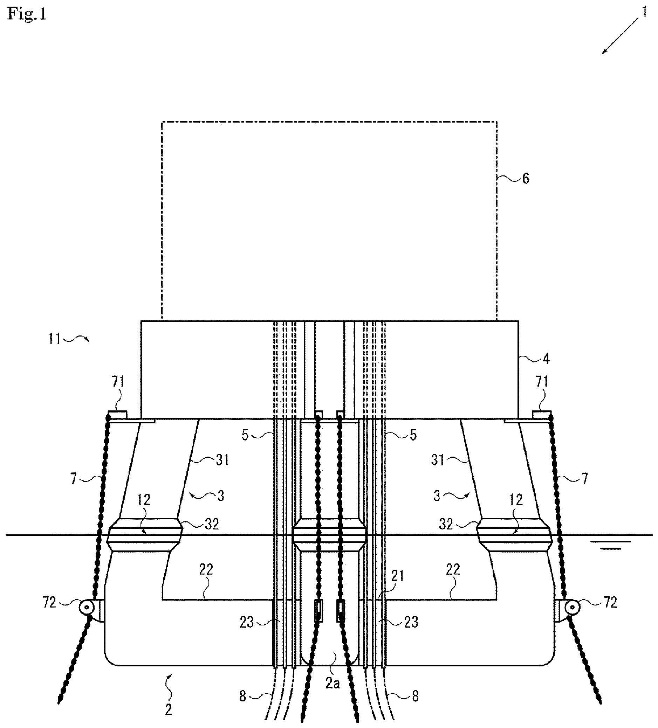

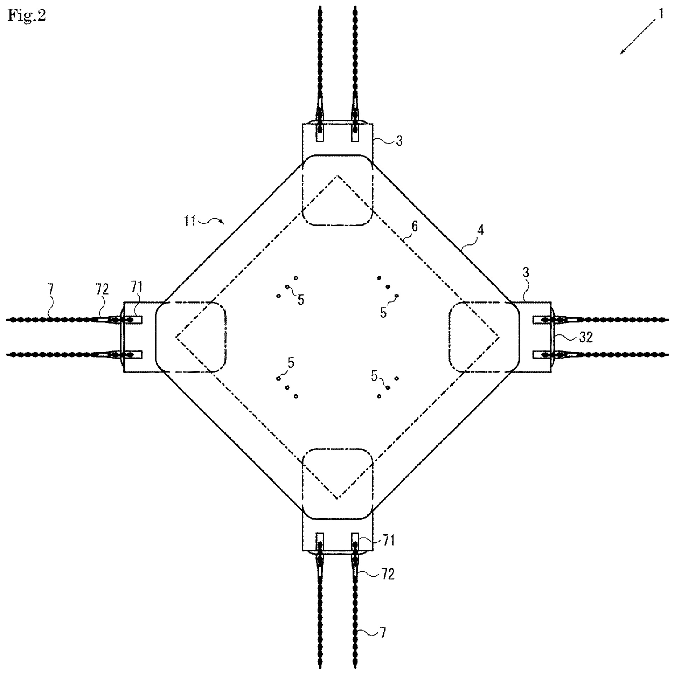

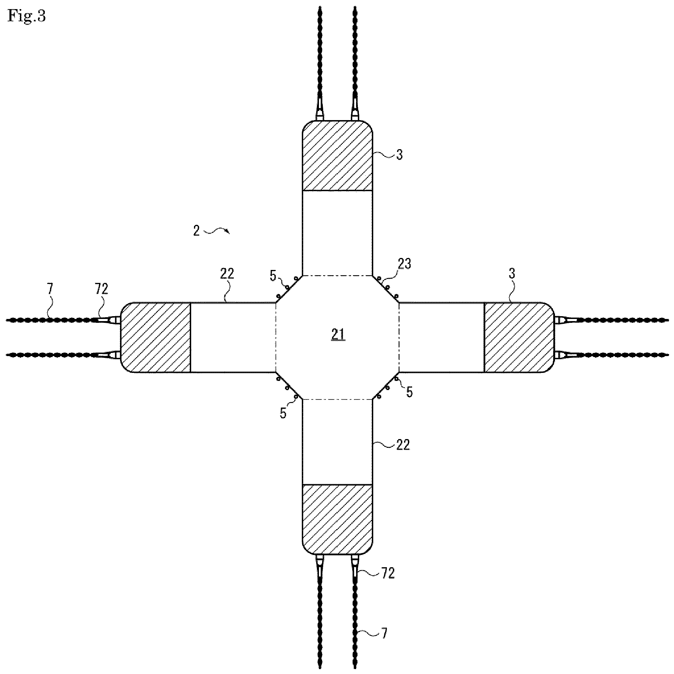

An embodiment of the present invention will be described below with reference to Figs. 1 to 5(D). Here, Fig. 1 is a side view that illustrates an offshore facility that includes the floating structure according to an embodiment of the present invention. Fig. 2 is a plan view of the offshore facility illustrated in Fig. 1. Fig. 3 is a cross-sectional view taken along line A-A of the floating structure illustrated in Fig. 1.

As illustrated in Fig. 1, an offshore facility 1 according to an embodiment of the present invention includes a floating structure 11 that includes a lower hull 2 that constitutes a floating body in a state of being submerged in water, four columns 3 erected on the lower hull 2, an upper hull 4 arranged on the four columns 3, and protection pipes 5 that are supported at both ends by the lower hull 2 and the upper hull 4, an upper structure 6 arranged on the upper hull 4, and a mooring line 7 that moors the floating structure 11 onto the sea floor.

For example, as illustrated in Fig. 3, the lower hull 2 includes a central part 21 and four columnar bodies 22 radially extending from the central part 21. The central part 21 and the columnar bodies 22 may have a cavity inside thereof, and may be configured to be capable of pouring and discharging ballast water as necessary.

The central part 21 is a columnar body having an axial center in a substantially vertical direction, and may have a substantially prismatic shape or a substantially cylindrical shape. In the present embodiment, the central part 21 has an octagonal columnar shape.

The four columnar bodies 22 have substantially the same shape, and are arranged at equal intervals (90° intervals) around the central part 21. The columnar body 22 is a columnar body having an axial center in a substantially horizontal direction, and may have a substantially prismatic shape or a substantially cylindrical shape.

The lower hull 2 may include a support surface 23 on which the protection pipe 5 is arranged on a side surface of the central part 21. The support surface 23 has, for example, a planar shape, but may be a convex or concave curved surface.

The column 3 is installed at each end part of the four columnar bodies 22 constituting the lower hull 2 on the side opposite to the central part 21. The column 3 may have a substantially prismatic shape or a substantially cylindrical shape. The column 3 has a cavity inside thereof, and may communicate with or be divided from the cavity of the columnar body 22. The column 3 may be configured to be capable of pouring and discharging ballast water as necessary.

The column 3 may have an inclined part 31 whose upper part is inclined toward the center. By forming the inclined part 31, it is possible to adjust the size of the upper hull 4 to the minimum size necessary for installation of the upper structure 6, and it is possible to reduce the static load and the reinforcing structure's weight applied to the upper hull 4.

In the present embodiment, the inclined part 31 is formed to extend above and below a water surface penetration part 12, but the inclined part 31 may be formed only in a part upward relative to the water surface penetration part 12. The column 3 may be formed to extend vertically upward without the inclined part 31.

The column 3 may have a broad part 32 in the water surface penetration part 12. The broad part 32 is an addition arranged on the outer periphery of the column 3 extending above and below the operation draft. By arranging the broad part 32, it is possible to suppress a decrease in motion performance in waves while improving restoring performance of the floating structure 11, and it is also possible to reduce the structure's weight. The broad part 32 may be omitted as necessary.

The upper hull 4 is, for example, a structure that forms a deck on which the upper structure 6 can be installed. The upper hull 4 may have a box shape or a plate shape. As illustrated, in the case of the upper hull 4 in a box shape, the inside thereof is used as a space in which, for example, necessary cables and equipment are arranged. The inside of the upper hull 4 may be formed in a plurality of layers. A part or an entirety of the upper structure 6 may be accommodated in the upper hull 4. A bottom part of the upper hull 4 is connected to upper end parts of the four columns 3.

The protection pipe 5 is a pipe through which, for example, a power transmission cable 8 is inserted. However, the linear structure inserted into the protection pipe 5 is not limited to the power transmission cable 8, and may be another linear structure (for example, a communication cable, a fluid riser hose, or the like) that needs to be thrown into the sea from the floating structure 11. The linear structure preferably has flexibility.

Since the upper part of the protection pipe 5 is connected to the upper hull 4 and the lower part of the protection pipe 5 is connected to the lower hull 2, the protection pipe 5 is supported at both ends by the upper hull 4 and the lower hull 2. The inner diameter of the protection pipe 5 is designed depending on the thickness of the linear structure (for example, the power transmission cable 8) to be inserted.

For example, as illustrated in Fig. 1, the upper part of the protection pipe 5 may be connected to the upper hull 4 so as to penetrate from the bottom part of the upper hull 4 to the deck. Although not illustrated, the protection pipe 5 may be connected in a state of penetrating at least the bottom part of the upper hull 4 so as to communicate with an internal space of the upper hull 4. The protection pipe 5 penetrating to the deck and the protection pipe 5 communicating with the internal space of the upper hull 4 may be intermixed. The part of the protection pipe 5 that penetrates the upper hull 4 is fixed by welding, for example.

The lower part of the protection pipe 5 is connected to the support surface 23 formed on the lower hull 2 as illustrated in Figs. 1 and 3, for example. That is, the protection pipe 5 is arranged on the side surface of the central part 21. The protection pipe 5 may be fixed to the support surface 23 by welding, or may be embedded in an outer wall of the central part 21 constituting the support surface 23.

As illustrated in Fig. 1, the protection pipe 5 may be configured such that the lower end protrudes downward relative to a bottom surface 2a of the lower hull 2. In the present embodiment, the bottom surface 2a of the lower hull 2 corresponds to the bottom surface of the central part 21 having the support surface 23 on which the protection pipe 5 is arranged. In this manner, by protruding the protection pipe 5 downward relative to the bottom surface 2a of the lower hull 2, it is possible to suppress contact between the power transmission cable 8 and the lower hull 2.

Although not illustrated, a damping material such as an elastic material may be arranged in openings at the upper end and the lower end of the protection pipe 5 as necessary to reduce friction between the power transmission cable 8 and the protection pipe 5. A reinforcing member such as a stiffener may be arranged in the openings of the upper end and the lower end of the protection pipe 5 as necessary. Note that in the present embodiment, since the damping material and the reinforcing material are components attached to the protection pipe 5, the damping material and the reinforcing material can be regarded as a part of the protection pipe 5 in the present embodiment.

In the present embodiment, the 12 protection pipes 5 are arranged, but the power transmission cable 8 need not necessarily be inserted into all the protection pipes 5 from the beginning. For the protection pipe 5 that is not used, the opening at the upper end is only required to be plugged. By arranging the protection pipes 5 to spare in advance, it is possible to easily cope with a case where the number of power transmission cables 8 increases afterward.

The upper structure 6 is, for example, a substation facility. The substation facility includes, for example, a gas insulation switchgear, a vacuum insulated switchgear, and a main transformer. An offshore substation facility basically has the same configuration as that of the substation facility on land, but measures against salt damage and the like are taken. In a case where the upper structure 6 is a substation facility, a plurality of offshore wind power generation apparatuses are arranged around the floating structure 11, and electric power generated by these offshore wind power generation apparatuses is collected in the upper structure 6 (substation facility) of the floating structure 11 according to the present embodiment and then transmitted to a power receiving facility on land or the like.

Therefore, in the case where the upper structure 6 is a substation facility, the plurality of power transmission cables 8 are coupled to the floating structure 11. In a conventional semi-submersible type floating structure, it is common to throw a power transmission cable into the sea from the outer edge of the floating body. The outer edge of the floating body is a part where up-down motion due to pitching is severe, a load applied to the power transmission cable is large, and the floating body is easily damaged.

On the other hand, in the floating structure 11 according to the present embodiment, since the protection pipe 5 is arranged in a part close to the center of the floating structure 11, the power transmission cable 8 can be arranged in a place where up-down motion due to pitching is small, and a load applied to the power transmission cable 8 to be thrown into the sea can be reduced.

The upper structure 6 is not limited to a substation facility. For example, the upper structure 6 may be a power generation facility including a wind power generation apparatus, a photovoltaic power generation apparatus, and an ocean thermal energy conversion power generation apparatus, or may be a power storage facility including a storage battery capable of storing electricity transmitted from a plurality of power generation apparatuses.

The upper structure 6 is not limited to an electric power facility, and may be an offshore production facility such as an oil/gas production facility for producing and storing oil/gas offshore and a carbon dioxide capture and storage (CCS) facility for artificially containing carbon dioxide, or may be an observation facility for acquiring ocean data, wind condition data, and the like.

The mooring line 7 is a chain for catenary-mooring the floating structure 11 to the sea floor, for example. The upper end of the mooring line 7 is connected to a stopper 71 arranged on an upper part of the column 3. An intermediate part of the mooring line 7 is guided by a fair-leader 72 arranged on the side surface of the column 3.

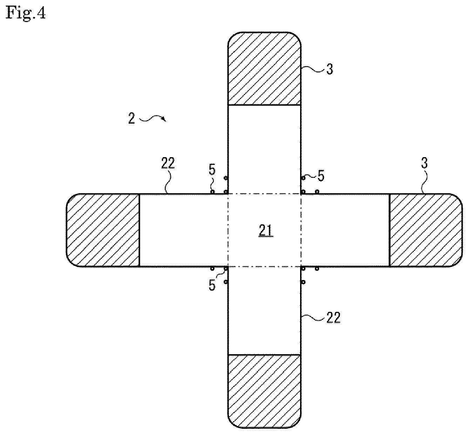

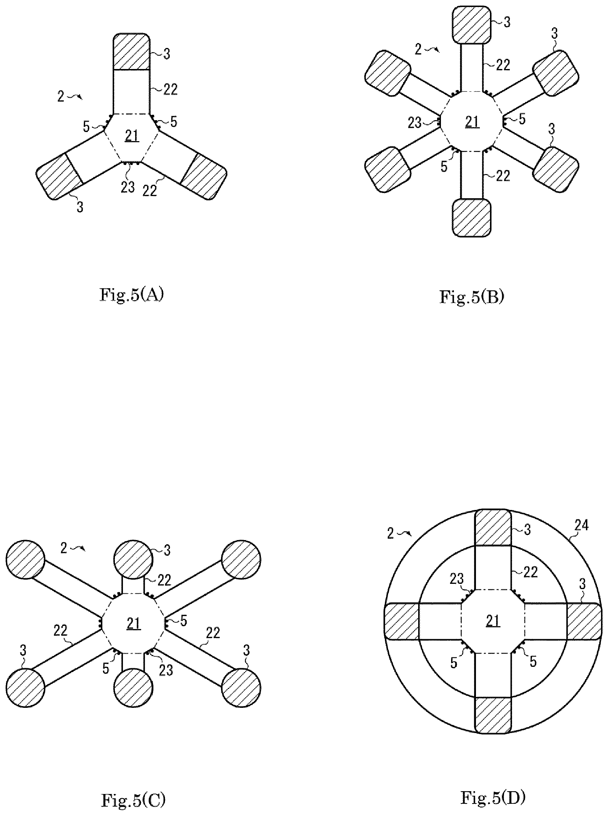

Next, a modification of the above-mentioned floating structure 11 will be described with reference to Figs. 4 to 5(D). Here, Fig. 4 is a view that illustrates the first modification of the floating structure illustrated in Fig. 1. Fig. 5 is views that illustrate another modification of the floating structure illustrated in Fig. 1, where Fig. 5(A) illustrates the second modification, Fig. 5(B) illustrates the third modification, Fig. 5(C) illustrates the fourth modification, and Fig. 5(D) illustrates the fifth modification. Each figure is the same cross-sectional view as the cross-sectional view taken along line A-A illustrated in Fig. 3, and for convenience of description, the mooring line 7 and the fair-leader 72 are not illustrated.

In the first modification illustrated in Fig. 4, the support surface 23 of the lower hull 2 in the above-mentioned embodiment is omitted. In this first modification, the central part 21 has a quadrangular prism shape. The protection pipe 5 is arranged on a side surface of the columnar body 22 close to the central part 21. Specifically, the protection pipe 5 is arranged on the side surface constituting a corner part of a part coupled to the central part 21 of the columnar body 22. Thus, the protection pipe 5 may be arranged around a part close to the central part 21. Note that the number of the protection pipes 5 is not limited to the illustrated number of them.

In the second modification illustrated in Fig. 5(A), the lower hull 2 includes the central part 21 and three of the columnar bodies 22. In this modification, the column 3 is arranged at each vertex of a regular triangle. The central part 21 of the second modification has a hexagonal prism shape, and the support surface 23 is formed on a side surface positioned between the columnar bodies 22. The support surface 23 may be omitted. The number of the protection pipes 5 is not limited to the illustrated number of them.

In the third modification illustrated in Fig. 5(B), the lower hull 2 includes the central part 21 and six of the columnar bodies 22. In this modification, the column 3 is arranged at each vertex of a regular hexagon. The central part 21 of the third modification has a dodecagonal prism shape, and the support surface 23 is formed on a side surface positioned between the columnar bodies 22. The support surface 23 may be omitted. The number of the protection pipes 5 is not limited to the illustrated number of them.

In the fourth modification illustrated in Fig. 5(C), the lower hull 2 includes the central part 21 and six of the columnar bodies 22. In this modification, the column 3 is arranged at an intermediate point between each vertex and each long side of a rectangle. The central part 21 of the fourth modification has the same configuration as that of the third modification. The support surface 23 may be omitted. The number of the protection pipes 5 is not limited to the illustrated number of them.

As described in the fourth modification, the outer shape of the lower hull 2 formed by connecting the center points of the columns 3 is not limited to a regular polygon, and may be a rectangle or other polygons. Even in a case where the outer shape of the lower hull 2 is not a regular polygon, the central part 21 is arranged at the center, and the columnar bodies 22 are arranged radially from the central part 21. The support surface 23 may be omitted. The number of the protection pipes 5 is not limited to the illustrated number of them.

As described in the third modification and the fourth modification, in the present embodiment, the columnar body 22 constituting the lower hull 2 may be thinner than the column 3. Although not illustrated, the columnar body 22 may be thicker than the column 3. As described in the fourth modification, in the present embodiment, the column 3 may have a cylindrical shape. As described in the fourth modification, the columnar bodies 22 constituting the lower hull 2 may have different horizontal lengths.

In the fifth modification illustrated in Fig. 5(D), the configuration of the lower hull 2 is changed. Specifically, the lower hull 2 according to the fifth modification includes, in addition to the central part 21 and the columnar body 22, an outer peripheral coupling part 24 arranged so as to couple outer end parts adjacent in the circumferential direction of the columnar body 22. Similarly to the columnar body 22, the outer peripheral coupling part 24 may have a cavity inside thereof, and may be configured to be capable of pouring and discharging ballast water as necessary. Note that here, the outer peripheral coupling part 24 is formed in an arc shape, but may be in a linear shape.

The present invention is not limited to the above-mentioned embodiment, and it is obvious that various modifications can be made without departing from the gist of the present invention.

### Reference Signs List

- 1: Offshore facility
- 2: Lower hull
- 2a: Bottom surface
- 3: Column
- 4: Upper hull
- 5: Protection pipe
- 6: Upper structure
- 7: Mooring line
- 8: Power transmission cable
- 11: Floating structure
- 12: Water surface penetration part
- 21: Central part
- 22: Columnar body
- 23: Support surface
- 24: Outer peripheral coupling part
- 31: Inclined part
- 32: Broad part
- 71: Stopper
- 72: Fair-leader

## Claims

1. A floating structure comprising:
a lower hull that constitutes a floating body in a state of being submerged in water;
a plurality of columns erected on the lower hull;
an upper hull arranged on the plurality of columns; and
a protection pipe that is supported at both ends by the lower hull and the upper hull and into which a linear structure can be inserted, wherein
the lower hull has a configuration including a central part and a plurality of columnar bodies radially extending from the central part, and
the protection pipe is arranged on the central part or a side surface of the columnar body close to the central part.

2. The floating structure according to claim 1, wherein the lower hull has a support surface on which the protection pipe is arranged on a side surface of the central part.

3. The floating structure according to claim 1, wherein the linear structure is any of a power transmission cable, a communication cable, and a fluid conveyance hose.

4. The floating structure according to claim 1, wherein the column has a broad part in a water surface penetration part.

5. The floating structure according to claim 1, wherein the column has an inclined part whose upper part is inclined toward a center.

6. An offshore facility comprising the floating structure according to any one of claims 1 to 5, wherein
an upper structure arranged in the upper hull is any of a power generation facility, a substation facility, a power storage facility, an oil/gas production facility, a carbon dioxide capture and storage facility, and an observation facility.
